# NEUE EUROPÄISCHE PATENTSCHRIFT

(11) **EP 2 602 133 B2**
(45) Veröffentlichungstag und Bekanntmachung des Hinweises auf die Entscheidung über den Einspruch: **10.08.2022**
(45) Hinweis auf die Patenterteilung: 28.12.2016
(21) Anmeldenummer: 12007964.5
(22) Anmeldetag: 27.11.2012
(51) Int. Cl.: B60D 1/26, B60D 1/58

(54) **Steuergerät und Anhängekupplung zur Kommunikation mit einem Bediengerät**
Controller and trailer coupling for communication with an operating device
Appareil de commande et attelage pour la communication avec un appareil de commande

(30) Priorität: 09.12.2011 DE 102011120651
(43) Veröffentlichungstag der Anmeldung: 12.06.2013
(60) Teilanmeldung: 16194620.7
(73) Patentinhaber: WESTFALIA - Automotive GmbH, 33378 Rheda-Wiedenbrück (DE)
(72) Erfinder: Röscheisen, Daniel, 33378 Rheda-Wiedenbrück (DE); Sielhorst, Bernhard, 33378 Rheda-Wiedenbrück (DE); Beutin, Jörg, 33334 Gütersloh (DE)
(74) Vertreter: Patentanwälte Bregenzer und Reule Partnerschaftsgesellschaft mbB

(56) Entgegenhaltungen:
- EP-A1- 2 502 762
- EP-A2- 2 280 263
- DE-U1-202009 005 185
- US-A- 5 650 764
- US-A1- 2005 285 371

## Beschreibung

Die Erfindung betrifft ein Steuergerät für eine an einem Kraftfahrzeug angeordnete oder anordenbare Anhängekupplung, die ein an einem Kupplungsarm angeordnetes Kuppelelement zum Ankuppeln eines Anhängers aufweist, gemäß dem Oberbegriff des Anspruchs 1.

Ein derartiges Steuergerät ist in US 20050285371 A1 oder EP 2 502 762 A1 beschrieben.

Eine weitere Anhängekupplung und ein solches Steuergerät sind aus DE 10 2008 034 848 A1 bekannt.

Bei der bekannten Anhängekupplung ist ein drahtloser Sender zum Ansteuern einer Entriegelung bzw. Verriegelung der Anhängekupplung gezeigt. Allerdings ist keine Rückmeldung vorhanden, das heißt dass beispielsweise der Bediener lediglich anhand der Reaktion der Anhängekupplung, zum Beispiel einem herabfallenden Kupplungsarm, erkennen kann, ob seine Bedienhandlung erfolgreich war.

Zur Anzeige von Sensorsignalen, zum Beispiel Drehwinkelsensorsignalen, sind Displays bekannt, beispielsweise direkt an einem Kupplungsarm angeordnete Anzeigemittel, wie in dem nicht vorveröffentlichten Gebrauchsmuster 20 2011 101 597 beschrieben.

Es ist daher die Aufgabe der vorliegenden Erfindung, den Bedienkomfort bei einer Anhängekupplung bzw. dessen Steuergerät zu verbessern.

Zur Lösung der Aufgabe ist ein Steuergerät für eine Anhängekupplung gemäß der technischen Lehre des Anspruchs 1 vorgesehen.

Es ist ein Grundgedanke der Erfindung, anhand einer grafischen Anzeige, d.h. einer grafischen Oberfläche zur Bedienung der Anhängekupplung und/oder zur Anzeige von Daten der Anhängekupplung eine unmittelbare Rückkopplung zu geben, die der Bediener sofort erfassen kann. Dadurch wird die Bedienung oder auch die Überprüfung der Anhängekupplung erheblich erleichtert. So kann beispielsweise die grafische Oberfläche dafür vorgesehen sein, die Anhängekupplung direkt zu bedienen, beispielsweise über einen sogenannten Touch-Screen, wo der Bediener durch eine Berührung der Oberfläche und Betätigung derselben mit Finger eine Bedienhandlung durchführen kann, beispielsweise den Kupplungsarm entriegeln kann.

Das Kraftfahrzeug kann beispielsweise ein Personenkraftwagen mit einem Verbrennungsmotor und/oder einem Elektromotor sein.

Die grafische Oberfläche erlaubt es auch, Sensordaten anschaulich auszugeben, beispielsweise einen Belastungszustand des Kupplungsarms durch eine Stützlast und/oder eine Zuglast oder die Masse des Anhängers an sich farbig anzudeuten. Selbst ein Belastungsdiagramm, das die Ausdehnung von Lastflächen oder sonstigen Belastungszonen des Kupplungsarms oder der den Kupplungsarm haltenden Halterung der Anhängekupplung, repräsentiert, kann anhand der grafischen Anzeigeoberfläche des Bediengeräts einfach jedoch sehr anschaulich verdeutlicht werden.

Vorzugsweise ist das Steuergerät zur Ausgabe von einer oder mehreren der nachfolgend beschriebenen verschiedenen Ausgestaltungen des Meldesignals ausgestaltet:
Das Meldesignal kann beispielsweise eine an dem Kupplungsarm angreifende Stützlast repräsentieren. Hierfür wertet das Steuergerät bzw. dessen Auswertemittel beispielsweise ein Sensorsignal eines Dehnungsmessstreifens aus, der an dem Kupplungsarm oder dessen Halterung angeordnet ist.

Eine andere Ausgestaltung der Erfindung kann vorsehen, dass das Meldesignal eine Masse des Anhängers repräsentiert, auch indirekt, indem die Auswertemittel beispielsweise das vorgenannte Stützlastsignal sowie ein Zuglastsignal, das ein Kraftsensor oder mehrere Kraftsensoren an Kupplungsarm und/oder Halterung erzeugen, entsprechend auswerten.

Weiterhin ist es möglich, dass das Meldesignal beispielsweise eine Drehwinkelstellung des Anhängers relativ zum Kupplungsarm bzw. Kraftfahrzeug enthält. Hierfür ist beispielsweise an der Anhängekupplung ein Drehwinkelsensor vorgesehen, beispielsweise ein optischer Drehwinkelsensor.

Selbstverständlich können die vorgenannten Sensoren einen Bestandteil des Steuergeräts oder der Anhängekupplung bilden.

Erfindungsgemäß ist vorgesehen, dass das Steuergerät Authentifizierungsmittel zur Überprüfung einer Autorisierung des Bediengeräts für eine Kommunikation mit dem Steuergerät aufweist. Somit kann beispielsweise sichergestellt werden, dass nur ein Bediener bzw. ein Bediengerät die Anhängekupplung und das Steuergerät ansteuern können oder auch von dem Steuergerät Daten abrufen können, wenn eine Autorisierung vorliegt. Beispielsweise kann ein Zugangsschlüssel vorgesehen sein, mit dem sich das Bediengerät bei dem Steuergerät anmeldet. Es können auch Authentifizierungs- oder Identifizierungscodes, Passworte oder dergleichen von den Authentifizierungsmitteln ausgewertet werden. Beispielsweise gibt ein Bediener an der Bedienoberfläche des Bediengeräts einen entsprechenden Zahlen- und/oder Buchstaben enthaltenden Code ein.

Weiterhin ist es möglich, dass das Bediengerät mittels einer Kamera einen optischen Code einliest, der beispielsweise in einer Bedienungsanleitung der Anhängekupplung abgebildet ist und anschließend von dem Programmmodul des Bediengeräts interpretiert und an das Steuergerät gesendet wird. Bevorzugt ist also das Bediengerät dazu ausgestaltet, anhand eines optischen Codes erzeugte Zugangsdaten zu empfangen und zu überprüfen. Das Programmmodul weist zweckmäßigerweise Mittel auf, einen solchen optischen Code einzulesen und daraus Zugangsdaten für ein erfindungsgemäßes Steuergerät zu generieren.

Die Bediengerät-Schnittstelle umfasst zweckmäßigerweise eine drahtlose Schnittstelle. Die drahtlose Schnittstelle kann eine optische Schnittstelle oder auch eine Funkschnittstelle umfassen. Besonders bevorzugt sind eine Bluetooth-Schnittstelle und/oder eine WLAN-Schnittstelle. Möglich wäre aber auch eine leitungsgebundene Schnittstelle, z.B. USB (Universal Serial Bus).

Weiterhin ist es zweckmäßig, wenn das Steuergerät eine Bordnetz-Schnittstelle zur Kommunikation mit einem Bordnetz des Kraftfahrzeugs umfasst.

Die Bordnetz-Schnittstelle umfasst beispielsweise eine BusSchnittstelle zur Kommunikation mit einem Datenbus des Kraftfahrzeugs. Die Busschnittstelle umfasst beispielsweise eine CAN-Schnittstelle.

Das Steuergerät ist zweckmäßigerweise zur Übertragung von über die Bordnetz-Schnittstelle empfangenen Daten an das Bediengerät über die einen Bestandteil des Steuergeräts bildende Bediengerät-Schnittstelle, also beispielsweise einer drahtlosen Schnittstelle, ausgestaltet. Somit können also beispielsweise vom Bordnetz empfangende Daten, zum Beispiel Geschwindigkeitswerte, Abstandwerte von Parksensoren oder dergleichen, von dem Steuergerät an das Bediengerät übertragen und von dem letztgenannten auch ausgegeben werden. Auch in umgekehrter Richtung, quasi der Steuerrichtung, ist eine solche Kommunikation zweckmäßig, das heißt dass das Bediengerät an das Steuergerät Daten, Steuerbefehle etc. sendet, welches wiederum diese Daten zumindest teilweise über die Bordnetz-Schnittstelle an das Bordnetz des Kraftfahrzeuges weiterleitet.

Eine andere Variante der Erfindung kann vorsehen, dass das Steuergerät selbst keine Bediengerät-Schnittstelle zur direkten, z.B. drahtlosen Kommunikation mit dem Bediengerät hat, sondern das Bordnetz und eine drahtlose Schnittstelle des Kraftfahrzeugs dazu nutzt, mit dem mobilen Bediengerät zu kommunizieren. Beispielsweise ist es zur Kommunikation mit dem mobilen Bediengerät über das Bordnetz und einer mit dem Bordnetz verbundenen, zur Kommunikation mit dem mobilen Bediengerät vorgesehenen drahtlosen Schnittstelle ausgestaltet. Das Bordnetz hat also beispielsweise eine Drahtlos-Schnittstelle, zum Beispiel eine Bluetooth-Schnittstelle und/oder eine WLAN-Schnittstelle, die das Steuergerät zur Kommunikation mit dem mobilen Bediengerät quasi mitnutzt.

Bevorzugt hat das Bediengerät mindestens einen Steuerausgang zum Steuern oder Schalten eines Antriebs der Anhängekupplung, zum Beispiel eines zum Verriegeln des Kupplungsarms vorgesehenen Verriegelungsantriebs, der auch einen Entriegelungsantrieb umfassen oder bilden kann, und/oder eines zum Verstellen des Kupplungsarms vorgesehenen Stellantriebs. Das Steuergerät ist zum Ansteuern des mindestens einen Steuerausgangs anhand des mindestens einen über die Bediengerät-Schnittstelle empfangenen Steuersignals ausgestaltet. Beispielsweise ist eine grafische Bedienoberfläche an dem Bediengerät vorhanden, über die der Bediener direkt Steuerbefehle an das Steuergerät senden kann.

Besonders bevorzugt ist es, wenn der Bediener über seine Bedienhandlung an dem Bediengerät den Kupplungsarm zwischen verschiedenen Stellungen verstellen kann, zum Beispiel zwischen einer zum Anhängen eines Anhängers vorgesehenen Gebrauchsstellung, bei der der Kupplungsarm nach hinten vor einen Stoßfänger des Kraftfahrzeugs vorsteht, und einer Nichtgebrauchsstellung, bei der der Kupplungsarm zum Kraftfahrzeug hin verstellt ist, beispielsweise hinter den Stoßfänger zurück verstellt ist. Das Bediengerät zeigt die jeweilige Stellung des Kupplungsarms an, so dass der Bediener eine direkte Rückkopplung hat, wo der Kupplungsarm gerade steht.

Es ist auch eine Art Tipp-Bedienhandlung möglich, bei der der Bediener auf einen bestimmten Ort an der Bedienoberfläche kurz tippt und der Kupplungsarm dann anschließend durch einen Stellantrieb der Anhängekupplung in Richtung eines Ortes verstellt wird, der dem gewählten Ort oder Bereich an der Bedienoberfläche entspricht, beispielsweise der vorgenannten Gebrauchsstellung.

Das Steuergerät kann einen Sensor direkt an Bord haben, zum Beispiel einen Drehwinkelsensor, Stützlastsensor oder dergleichen.

Bevorzugt hat das Steuergerät einen Sensoreingang für einen an der Anhängekupplung, zum Beispiel den Kupplungsarm oder dem Kuppelelement, angeordneten Sensor.

Das Steuergerät ist erfindungsgemäß zur Ansteuerung von elektrischen Kontakten einer zur elektrischen Versorgung von mindestens einer Leuchte eines Anhängers oder Lastenträgers vorgesehen Anhängersteckdose ausgestaltet. Die elektrischen Kontakte sind beispielsweise direkt mit dem Steuergerät bzw. dessen Stromversorgung verbunden. Das Steuergerät ist zum Ansteuern der elektrischen Kontakte, nämlich zur Überprüfung der mindestens einen Leuchte, infolge eines über die Bediengerät-Schnittstelle erhaltenen Steuersignals ausgestaltet. Wenn also ein Bediener beispielsweise die Blinkerleuchten des Anhängers überprüfen will, gibt er einen entsprechenden Befehl an dem Bediengerät ein, welches den Befehl an das Steuergerät überträgt. Das Steuergerät wiederum prüft dann die Leuchte entsprechend dem erhaltenen Befehl.

Das Steuergerät kann zweckmäßigerweise im Gehäuse einer Anhängersteckdose zur Stromversorgung eines Anhängers oder Lastenträgers angeordnet sein. Ein separates Gehäuse ist dann nicht notwendig. Selbstverständlich ist es möglich, für das Steuergerät ein Gehäuse vorzusehen, das nicht zu einer Steckdose gehört.

Das Steuergerät bildet zweckmäßigerweise einen Bestandteil eines Systems, das zumindest das drahtlose Bediengerät, beispielsweise in Gestalt eines Mobilfunk-Telefons, eines Smartphones, eines Tablet-PCs oder dergleichen, enthält. Weiterhin kann das System selbstverständlich auch die Anhängekupplung umfassen.

Weiterhin umfasst das Steuergerät vorteilhaft eine Kommunikationsschnittstelle oder kommuniziert mit einer Kommunikationsschnittstelle zum Anhänger oder Lastenträger. Die Kommunikationsschnittstelle kann beispielsweise in oder an einer Anhängersteckdose enthalten sein. Das Steuergerät ist zweckmäßigerweise zur Ausgabe von über die Kommunikationsschnittstelle erhaltenen Daten des Anhängers oder des Lastenträgers ausgestaltet beispielsweise können so Daten einer Parkassistenzeinrichtung, die am Anhänger oder Lastenträger angeordnet ist, vom Steuergerät empfangen und an der Bediengerät-Schnittstelle ausgegeben werden.

Auf Seiten des Bediengeräts sieht die Erfindung zweckmäßigerweise ein Programmmodul vor, dessen Programmcode von einem Prozessor des Bediengeräts ausgeführt werden kann, um die erfindungsgemäßen Funktionen zu realisieren, beispielsweise eine grafische Anzeige- und/oder Bedienoberfläche an einem Display des Bediengeräts zu erzeugen. Weiterhin ist das Programmmodul dazu vorgesehen, das mindestens eine von dem Steuergerät empfangene Meldesignal an der Anzeigeoberfläche oder Bedienoberfläche auszugeben und/oder anhand eines an dem Bediengerät, beispielsweise über die Bedienoberfläche, einen Tastendruck oder dergleichen, eingegebenen Steuerbefehls das mindestens eine Steuersignal für das Steuergerät zu erzeugen. Es versteht sich, dass nicht das Programmmodul selbst agiert, sondern dass es die Mittel des Bediengeräts nutzt, zum Beispiel dessen Prozessor, Display und dergleichen. Der Programmcode enthält z.B. Java.

Das erfindungsgemäße Programmmodul kann in ein an sich bekanntes Bediengerät geladen werden, so dass es die erfindungsgemäßen Funktionen erfüllt. Beispielsweise ist das Programmmodul nämlich eine sogenannte APP (Application).

Das Programmmodul ist zweckmäßigerweise zur Ausgabe eines Auswahlmenüs an der Anzeige- und/oder Bedienoberfläche des Bediengeräts ausgestaltet. Der Bediener kann anhand des Auswahlmenüs beispielsweise die Abfrage oder die Ausgabe von Daten von dem Steuergerät auswählen, eine Steuerfunktion aktivieren, beispielsweise zum Verstellen des Kupplungsarms, zu dessen Entriegelung oder dergleichen.

Nachfolgend werden Ausführungsbeispiele der Erfindung anhand der Zeichnung erläutert. Es zeigen:
- Figur 1: eine erste Anhängekupplung mit einem an einer Halterung feststehenden Kupplungsarm in perspektivischer Ansicht von schräg oben und ein Bediengerät zu dessen Bedienung oder Überprüfung,
- Figur 2: einen Kupplungsarm der Anhängekupplung gemäß Figur 1 von schräg oben,
- Figur 3: eine zweite Anhängekupplung mit einem an einer Halterung beweglich gelagerten Kupplungsarm in perspektivischer Ansicht von schräg unten,
- Figur 4: einen Kupplungsarm der Anhängekupplung gemäß Figur 3 von schräg vorn,
- Figur 5a: die Anhängekupplung gemäß Figur 3 in Gebrauchsstellung und ein Bediengerät zu dessen Bedienung, das diese Gebrauchsstellung anzeigt,
- Figur 5b: die Anordnung gemäß Figur 5a, jedoch mit aus der Gebrauchsstellung verstelltem Kupplungsarm,
- Figur 5c: die Anordnung gemäß Figur 5a, 5b, jedoch mit in eine Nichtgebrauchsstellung verstelltem Kupplungsarm,
- Figur 6: eine schematische Darstellung eines Steuergeräts und eines Bediengerät.

In der Zeichnung sind Anhängekupplungen 10 und 110 dargestellt, die teilweise gleiche oder ähnliche Komponenten aufweisen, die dementsprechend mit den gleichen Bezugsziffern oder mit Bezugsziffern versehen sind, die bei der Anhängekupplung 110 um 100 größer sind als bei der Anhängekupplung 10.

Die Anhängekupplungen 10, 110 weisen Halterungen 11, 111 auf, die an einem Kraftfahrzeug 90, zum Beispiel einem Personenkraftwagen, befestigbar sind.

Beispielsweise umfasst die Halterung 11 einen an einem Querträger 91 des Kraftfahrzeugs 90 angeordneten Grundhalter 12, von dem 2 Halteschenkel 13 abstehen. Zwischen den Halteschenkeln 13 ist ein Kupplungsarm 14 angeordnet. Der Kupplungsarm 14 ist mittels Schrauben 15, die Bohrungen 16 des Kupplungsarms 14 an einem fahrzeugseitigen Halteabschnitt 20 durchdringen, mit den Halteschenkeln 13 verschraubt. Somit ist also der Kupplungsarm 14 fest an der Halterung 11 befestigt. Von der Halterung 11 steht noch ein Steckdosenhalter 17 seitlich ab, an dem eine Anhängersteckdose (nicht dargestellt) befestigbar ist.

Bei der Anhängekupplung 110 ist eine am Kraftfahrzeug 90 befestigbare, zum Beispiel an einem nicht dargestellten Querträger befestigbare, Halterung 111 vorgesehen, die den Kupplungsarm 114 beweglich lagert. Beispielsweise ist der Kupplungsarm 114 um eine oder mehrere Drehachsen D1 und/oder D2 und/oder D3 schwenkbar und/oder verschieblich an der Halterung 111 gelagert. Ein Lagerkopf 118 der Halterung 111 greift in eine Lageraufnahme 119 an einem Halteabschnitt 20 des Kupplungsarms 114 am fahrzeugseitigen Endbereich des Kupplungsarms 114 ein, so dass eine Lagerung in der Art eines Kugelgelenks gegeben ist. Es versteht sich, dass auch andere Lagerkonzepte, beispielsweise Schiebelager, Schwenk-Schiebelager, mindestens ein Drehlager, insbesondere mehrere Drehlager mit zueinander winkeligen Drehachsen, kardanische Lagerungen oder dergleichen ohne weiteres möglich sind.

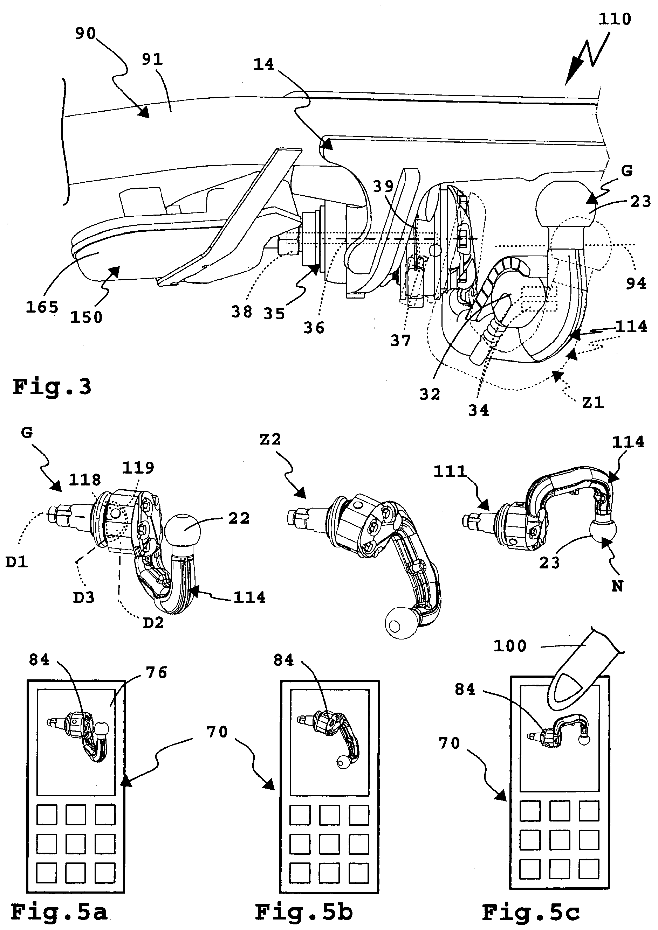

Der Kupplungsarm 114 ist beispielsweise zwischen einer in Figur 3 dargestellten Gebrauchsstellung G, die zum Ziehen eines Anhängers 92 vorgesehen ist, und einer hinter einen Stoßfänger 94, beispielsweise näher an den Querträger zurück verstellten, Nichtgebrauchsstellung N verstellbar. Es sind dazwischen liegende Positionen Z1 und Z2 dargestellt. Der Kupplungsarm 114 ist zweckmäßigerweise durch einen Stellantrieb 39 zwischen den Stellungen N und G motorisch verstellbar, z.B. mittels eines elektrischen Motors, der den Kupplungsarm 114 direkt oder über einen Seilzug oder ein sonstiges Getriebe antreibt.

Zusätzlich ist noch eine Verriegelung 35 vorhanden, um den Kupplungsarm 114 zumindest in der Gebrauchsstellung G zu verriegeln. Die Verriegelung 35 umfasst z.B. einen Verriegelungsbolzen 36, der Formstücke 37 in Verriegelungsaufnahmen an der Lageraufnahme 119 treibt. Der Verriegelungsbolzen 36 ist z.B. in die Verriegelungsstellung federbeaufschlagt und kann mittels eines Verriegelungsantriebs 38 in seine den Kupplungsarm 114 freigebende Entriegelungsstellung verstellen.

Die Kupplungsarme 14, 114 haben an ihren vom Kraftfahrzeug 90 entfernten Endbereichen 21 jeweils eine Kupplungskugel 22, die als Kuppelelement 23 zum Ankuppeln des Anhängers 92 (schematisch dargestellt) dient. Die Kupplungskugeln 22 sind an in der Gebrauchsstellung der Anhängekupplungen 10, 110 hoch stehenden Armabschnitten 24 vorgesehen. Die Armabschnitte 24 gehen mit einer Krümmung 25 in einen bei Gebrauch der Kupplungsarme 14, 114 im Wesentlichen horizontal verlaufenden Armabschnitt 26 über.

Beim Kupplungsarm 14 sind der Armabschnitt 26 und der Endbereich 21 quasi einstückig, d.h. dass der Endbereich 21 an einem freien Ende des Armabschnitts 26 vorgesehen ist. Nachfolgend wird jedoch der frei vor die Halterung 11 vorstehende Abschnitt des Kupplungsarms 14 als Armabschnitt 26 bezeichnet.

Beim Kupplungsarm 114 ist zwischen dem Halteabschnitt 20 und dem Armabschnitt 26 noch eine weitere Krümmung 27 vorhanden.

Die Anhängekupplungen 10, 110 sind dazu ausgestaltet, sowohl eine in einer vertikalen Richtung bzw. z-Richtung auf das Kuppelelement 23 wirkende Kraft, nachfolgend als Stützlast Fz bezeichnet, als auch eine in einer horizontalen Richtung bzw. x-Richtung auf das Kuppelelement 23 wirkende Last, nachfolgend als Zuglast Fx bezeichnet, zu messen. Dazu ist ein einziger Kraftsensor 30, beispielsweise ein Dehnungsmessstreifen 31, ausreichend. Dieser Kraftsensor 30 ist so optimal platziert, dass sein Sensorsignal 33 sowohl die Zuglast Fx als auch die Stützlast Fz repräsentiert.

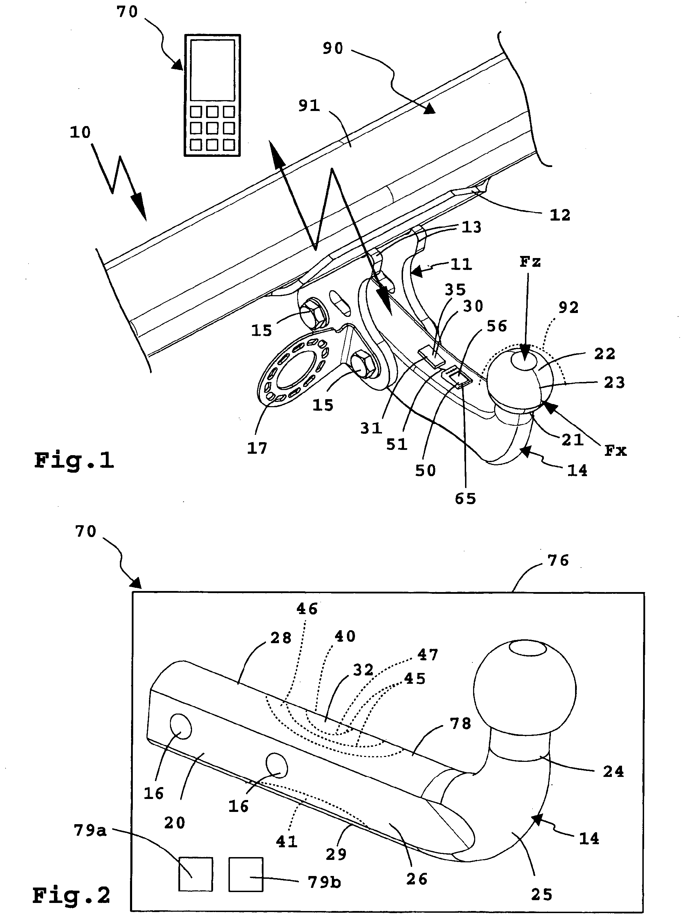

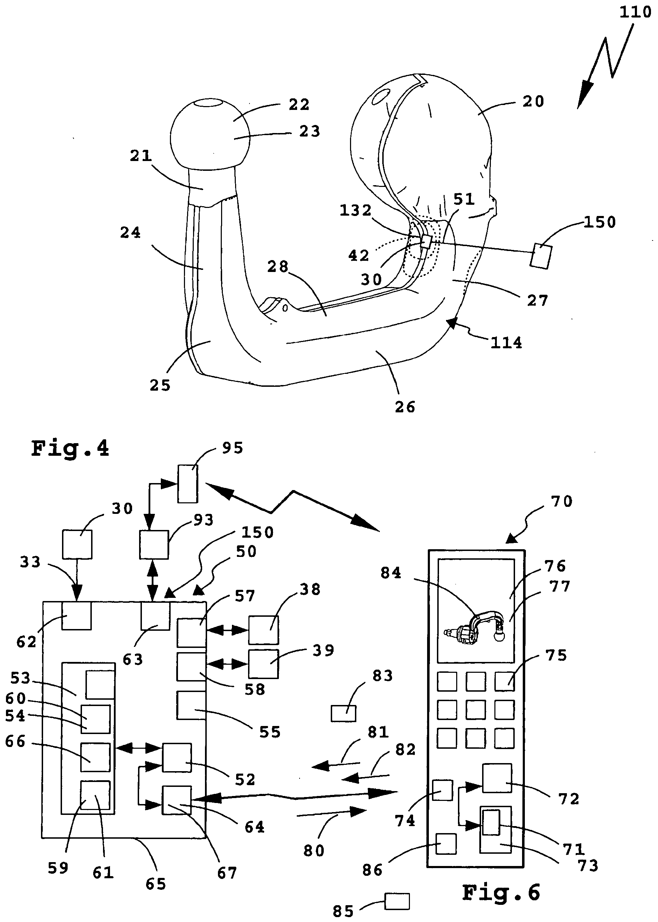

In den Figuren 2 und 4 sind mit gestrichelten Linien Dehnungsverläufe bzw. Dehnungsbereiche eingezeichnet, die sich bei unterschiedlicher Kraftbeanspruchung des Kupplungsarms 14 mit der Zuglast Fx und der Stützlast Fz ergeben. Bei einer Belastung mit der Stützlast Fz ergeben sich beispielsweise die in den Figuren 2 und 4 sichtbaren Verformungsbereiche 40 und 41 an einer Oberseite 28 und einer Unterseite 29 des Armabschnitts 26. Diese Dehnungsverformung stellt sich beispielsweise bei einer Belastung von 100 kg auf das Kuppelelement 23 ein.

Auch die Anhängekupplung 110 kommt mit einem einzigen Kraftsensor 30 aus. Bei Belastung des Kupplungsarms 114 mit einer Zuglast Fx und auch einer Stützlast Fz bildet sich beispielsweise ein Verformungsbereich 42 an der Innenseite der Krümmung 27 aus. Der Kraftsensor 30 ist in der Krümmung 27 angeordnet. Dort ist der Kraftsensor 30 vor Umwelteinflüssen zudem noch durch den Stoßfänger 94 des Kraftfahrzeugs 90 geschützt.

An den Anhängekupplungen 10, 110 sind Steuergeräte 50, 150 vorgesehen, die Steuerungsfunktionen und/oder Auswertefunktionen realisieren. Insofern könnte man bei einem Steuergerät gemäß der Erfindung durchaus auch von einem Auswertegerät sprechen, wenn es keine eigene Steuerungsfunktion hat. Zur Vereinfachung sind jedoch die Steuergeräte 50, 150 als Steuergeräte bezeichnet, auch wenn im Falle des Steuergeräts 50 eigentlich eher die Bezeichnung Auswerte-Gerät berechtigt wäre.

Die Steuergeräte 50, 150 sind beispielsweise über Leitungen 51 mit den Dehnungsmessstreifen 31 bzw. den Kraftsensoren 30 verbunden, um so beispielsweise eine Stützlast Fz zu ermitteln, die auf dem Kuppelelement 23 von oben her auflastet oder auch eine Zugkraft Fx, die in Fahrtrichtung des Kraftfahrzeugs 90 auf das Kuppelelement 23 wirkt.

Die Steuergeräte 50, 150 umfassen beispielsweise einen Prozessor 52, der Programmcode eines Auswertemoduls 54 auswertet, das in einem Speicher 53 des Steuergeräts 50, 150 gespeichert ist. Das Auswertemodul 54 wertet dazu das Sensorsignal 33, das über die Leitung 51 an das Steuergerät 50 oder 150 übermittelt wird, aus. Die Leitung 51 ist an einen Sensoreingang 62 des Steuergeräts 50 oder 150 angeschlossen.

Dieses Sensorsignal 33 repräsentiert im Stillstand des Kraftfahrzeugs 90 die Stützlast bzw. ermöglicht die Ermittlung der Stützlast Fz. Um aus dem Sensorsignal 33 auch eine Masse des Anhängers 92 zu bestimmen, hat das Steuergerät 50 oder 150 einen Beschleunigungssensor 55 an Bord oder eine Schnittstelle für ein Geschwindigkeits- oder Beschleunigungssignal. Bei einem Fahrbetrieb des Kraftfahrzeugs 90 bzw. des Gespanns bestehend aus Kraftfahrzeug 90 und Anhänger 92 ist somit aus dem Sensorsignal 33 eine Masse des Anhängers bestimmbar, wofür beispielsweise die Beschleunigung vom Auswertemodul 54 ausgewertet wird, die der Beschleunigungssensor 55 ermittelt.

Nun kann bei einem erfindungsgemäßen Steuergerät eine lokale Anzeige vorhanden sein, beispielsweise ein Display 56, das direkt am Kupplungsarm 14 angeordnet ist und dort beispielsweise die Stützlast oder die Masse des Anhängers 92 anzeigt.

Man kann sich vorstellen, dass eine solche lokale Anzeige nicht in jeder Situation bequem ablesbar ist. Insbesondere sind die grafischen Möglichkeiten sehr begrenzt. Darüber hinaus ist es nicht unbedingt vorteilhaft, im Außenbereich, d.h. dort wo die Umwelteinflüsse auf ein erfindungsgemäßes Steuergerät wirken, eine Anzeige vorzusehen. Die Anzeige ist nämlich Verschmutzung und Zerstörung ausgesetzt.

Bei dem Steuergerät 150 ist eine lokale Anzeige fast schon unmöglich, da es unmittelbar unter dem Querträger 91 und hinter dem Stoßfänger 94 für den Bediener normalerweise verborgen untergebracht ist.

Das Steuergerät 150 realisiert zudem noch eine Steuerungsfunktion dahingehend, dass es Steuerausgänge 57 und 58 zum Ansteuern des Verriegelungsantriebs 38 und des Stellantriebs 39 aufweist. Zur Ansteuerung der Steuerausgänge 57 und 58 ist ein Steuermodul 59 vorgesehen, das im vorliegenden Fall ebenfalls in Software realisiert ist, d.h. dass sein Programmcode vom Prozessor 52 ausführbar ist. Selbstverständlich ist es denkbar, dass beispielsweise das Steuermodul 59 und/oder das Auswertemodul 54 auch in Hardware realisiert sind, beispielsweise als programmierbares Gatter, zum Beispiel als FPGA.

In diesem Zusammenhang sei auch erwähnt, dass in dem Blockschaltbild gemäß Figur 6 die Steuergeräte 50 und 150 zur Vereinfachung des jeweiligen Verständnisses quasi als Universal-Steuergerät dargestellt sind. Selbstverständlich sind Komponenten und Bestandteile eines Steuergeräts zur Steuerung von Funktionen der Anhängekupplung (Verriegeln, Verstellen des Kupplungsarms oder dergleichen) bei einem nur Auswertung realisierenden Steuergerät unnötig, so zum Beispiel die Steuerausgänge 57 und 58 und das Steuermodul 59, die beim Steuergerät 50 nicht vorhanden sein müssen.

Das Auswertemodul 54 bildet, wenn sein Programmcode vom Prozessor 52 ausgeführt wird, ein Auswertemittel 60. Das Steuermodul 59 bildet, wenn sein Programmcode vom Prozessor 52 ausgeführt wird, ein Steuermittel 61. Das Steuermittel 61 überwacht beispielsweise, ob eine Verriegelung korrekt stattfindet, wofür eine entsprechende Verriegelungssensorik vorgesehen sein kann. Auch die Bewegungsabläufe bei der Anhängekupplung 110 werden von dem Steuermittel 61 überwacht und gesteuert, so dass zum Beispiel zunächst der Verriegelungsantrieb oder Entriegelungsantrieb 38 den Kupplungsarm 114 entriegelt, bevor der Stellantrieb 39 die Stellung des Kupplungsarms 114 verstellt.

Das Steuergerät 50, 150 hat zweckmäßigerweise eine Bordnetz-Schnittstelle 63 zur Kommunikation mit einem Bordnetz 93 des Kraftfahrzeugs 90. Das Bordnetz 93 umfasst zweckmäßigerweise einen Datenbus, zum Beispiel einen CAN oder LIN Bus, so dass die Bordnetz-Schnittstelle 63 zweckmäßigerweise eine BusSchnittstelle umfasst. Vorzugsweise wird das Steuergerät 50, 150 über die Bordnetz-Schnittstelle 63 mit elektrischer Energie versorgt.

Auf diesem Wege kann zum Beispiel das Steuergerät 150 eine Anhängersteckdose 32 mit elektrischer Energie versorgen bzw. diese ansteuern, so dass elektrische Kontakte 34, beispielsweise an sich bekannte Steckbuchsen, bestromt werden und nicht dargestellte Leuchten des Anhängers 92 elektrische Energie erhalten, wenn ein nicht dargestellter Stecker des Anhängers 92 in die Anhängersteckdose 32 eingesteckt ist.

Die Steuergeräte 50 oder 150 sind bei der in der Zeichnung dargestellten Bauweise jeweils in Gehäusen 65, 165 untergebracht, die dediziert für die Steuergeräte vorgesehen sind. Es wäre aber auch denkbar, z.B. das Steuergerät 150 im Gehäuse der Anhängersteckdose 32 unterzubringen.

Die Steuergeräte 50, 150 ermöglichen eine bequeme Bedienung, indem sie zur Kommunikation mit einem mobilen, externen Bediengerät 70 ausgestaltet sind, beispielsweise einem Mobilfunk-Telefon, einem Smartphone, einem Tablet-PC oder dergleichen. Das zur Kommunikation mit dem Steuergerät 50 und/oder 150 vorgesehene Bediengerät 70 hat ein Programmmodul 71 an Bord, mit dem es die Kommunikation und komfortable Bedienung des Steuergeräts 50 oder 150 und/oder Ausgabe von Daten des Steuergeräts 50 oder 150 realisiert, wobei das Programmmodul 71 eine grafische Oberfläche an einem Display 76 des Bediengeräts 70 erzeugt.

Das Programmmodul 71 enthält Programmcode, der von einem Prozessor 72 ausführbar ist. Das Programmmodul 71 ist beispielsweise in einem Speicher 73 des Bediengeräts 70 gespeichert. Das Programmmodul 71 ist zweckmäßigerweise in das Bediengerät 70 ladbar, zum Beispiel aus dem Internet und/oder über eine sonstige Ladeschnittstelle, zum Beispiel über eine USB-Schnittstelle oder drahtlos, beispielsweise über eine Bluetooth-Schnittstelle 74.

An dem Display 76 kann das Bediengerät 70 eine grafische Bedienoberfläche 77 darstellen, über die das Bediengerät 70 selbst und/oder das Steuergerät 50 und/oder 150 bedienbar ist. Insoweit die Bedienoberfläche77 zur Bedienung des Steuergeräts 50 oder 150 vorgesehen ist, steuert das Programmmodul 71 das Display 76 an, beispielsweise direkt oder unter Nutzung von Betriebsmitteln des Bediengeräts 70, beispielsweise dessen nicht weiter erläuterten Betriebssystems.

Das Steuergerät 50 oder 150 hat eine Bediengerät-Schnittstelle 64 zur Kommunikation mit dem Bediengerät 70. Die Bediengeräts-Schnittstelle 64 umfasst beispielsweise ein Bluetooth-Modul 67, also eine drahtlose Schnittstelle. Somit kann also das Steuergerät 50 oder 150 ein Meldesignal 80, das beispielsweise das Sensorsignal 33 oder daraus generierte Daten, zum Beispiel die Masse des Anhängers 92, die Stützlast, die auf dem Kupplungsarm 14, 114 lastet oder dergleichen, an das Bediengerät 70 senden, welches unter Nutzung des Programmmoduls 71 an der grafischen Bedienoberfläche 77 das Meldesignal 80 ausgibt.

Dabei ist es möglich, dass an der Bedienoberfläche 77 beispielsweise aus dem Meldesignal 80 generierte Zahlenwerte ausgegeben werden.

Vorteilhaft ist es, wenn das Programmmodul 71 die Daten des Meldesignals 80 quasi aufbereitet. So kann beispielsweise an dem Display 76 ein Symbol 78 bzw. eine grafische Repräsentanz des Kupplungsarms 14 oder 114 angezeigt werden (Figur 2), wobei das Symbol 78 zusätzlich mit Daten des Meldesignals 80 "angereichert" ist, so dass beispielsweise in Abhängigkeit von der Stützlast und/oder der Masse des Anhängers 92 die Verformungsbereiche 40 und 41 grafisch verdeutlicht werden, zum Beispiel durch Linien 45, unterschiedliche Farbflächen am Kupplungsarm 14 oder 114 oder dergleichen. Somit wird also der Belastungszustand der Anhängekupplung 10, 110 an der Bedienoberfläche 77 anschaulich. Der Bediener kann beispielsweise durch eine entsprechend in Signalfarben (rot, gelb oder dergleichen) eingefärbten Flächen 46, 47 am Kupplungsarm 14, 114 bzw. dessen Symbol an der Bedienoberfläche 77 erkennen, wie stark die jeweilige Anhängekupplung 10 oder 110 tatsächlich belastet ist.

Die grafischen Daten, mit denen das Symbol 78 erzeugt wird, können beispielsweise direkt vom Programmmodul 71 generiert werden. Somit kann also beispielsweise die Leistung des Prozessors 52 relativ gering sein, während die eigentliche grafische Ausgabe der Daten des Meldesignals 80 vom Prozessor 72 geleistet wird, der hierfür ohnehin schon ausgelegt ist.

Es ist auch möglich, dass das Steuergerät 50 oder 150 entsprechende grafische Daten an das Bediengerät 70 bzw. das Programmmodul 71 sendet, so dass dort relativ wenig Intelligenz zur Ausgabe der Daten notwendig ist.

Selbstverständlich kann das Programmmodul 71 auch Warnmeldungen, die im Rahmen des Meldesignals 80 übertragen werden oder die das Programmmodul 71 anhand des Meldesignals 80 generiert, beispielsweise bei Überbelastung der Anhängekupplung, anhand der Ausgabemittel des Bediengeräts 70 ausgeben, beispielsweise am Display 76, über einen nicht dargestellten Lautsprecher des Bediengeräts 70 oder dergleichen.

Der Bediener kann beispielsweise anhand von Eingabemitteln 75 des Bediengeräts 70, zum Beispiel Tasten, auswählen, welche Daten an der Bedienoberfläche 77 angezeigt werden sollen, beispielsweise die Masse des Anhängers 92, die jeweilige Stützlast oder dergleichen. Es ist auch möglich, dass an der Bedienoberfläche 77 vom Programmmodul 71 ein Auswahlmenü generiert wird, bei dem das Programmmodul 71 bei Druck auf entsprechende Flächen 79a, 79b, die ein Auswahlmenü bilden, oder unter den Flächen 79 liegende Tasten der Eingabemittel 75 ein Steuersignal 81 erzeugt, das über die Schnittstelle 74 zur Schnittstelle 64 des Steuergeräts 50 oder 150 übertragen wird und dieses dazu anweist, beispielsweise mit dem Meldesignal die entsprechenden Daten an das Bediengerät 70 zu übermitteln, beispielsweise die Masse des Anhängers 92, die Stützlast oder dergleichen. Somit interagieren also das Steuergerät 50, 150 einerseits und das Bediengerät 70 bzw. dessen Programmmodul 71 andererseits miteinander, um Daten an dem Display 76 auszugeben.

An dieser Stelle sei bemerkt, dass selbstverständlich auch eine Sprachausgabe am Bediengerät 70 möglich ist, das heißt dass beispielsweise die Masse des Anhängers 92 von einer synthetischen Stimme gesprochen wird.

Neben dieser Befehlseingabe am Bediengerät 70, die zur Datenabfrage dient, liegt auch eine Befehlseingabe zur direkten Steuerung eines erfindungsgemäßen Steuergeräts bzw. einer Anhängekupplung im Rahmen der Erfindung:
Beispielsweise kann das Programmmodul 71, was in den Figuren 5a-5b dargestellt ist, eine grafische Bedienoberfläche im Sinne einer Steuerung der Anhängekupplung 110 realisieren. So wird in diesem Fall an dem Display 76 eine Bedienoberfläche 77 angezeigt, bei der der Kupplungsarm 114 als ein Symbol 84 dargestellt ist. Eine jeweilige Stellung des Symbols 84 entspricht einer jeweiligen Stellung des Kupplungsarms 114, so zum Beispiel der Gebrauchsstellung G in Figur 5a und der Nichtgebrauchsstellung N in Figur 5c. Wenn der Bediener mit seinem Finger 100 über das Display 76 streicht, das die Funktion eines berührungsempfindlichen Bildschirms hat, kann er damit direkt die Stellung des Kupplungsarms 114 beeinflussen. Je nachdem, in welche Stellung er das Symbol 84 verstellt, wandert der Kupplungsarm 114 in der Realität mit, indem das Programmmodul 71 entsprechende Steuersignale 82 an das Steuergerät 150 sendet, welches infolgedessen den Stellantrieb 39 so ansteuert, dass er den Kupplungsarm 114 in eine der Position des Fingers 100 am Display 76 entsprechende Lage verstellt.

Über die Meldesignale 80 meldet das Steuergerät die Position des Kupplungsarms 114 an das Bediengerät 70, welches die Stellung des Symbols 84 an der Bedienoberfläche 77 entsprechend nachführt bzw. anpasst.

Der Bediener kann also bequem hinter dem Kraftfahrzeug 90 stehen, das Bediengerät 70 in der Hand halten und über das Display 76 streichen, um den Kupplungsarm 114 zu verstellen. Diese Bedienung ist äußerst komfortabel.

Selbstverständlich ist es vorteilhaft, wenn nicht jeder beliebige Nutzer, der beispielsweise das Programmmodul 71 auf sein Mobilfunk-Telefon lädt, die Anhängekupplungen 10, 110 bedienen und/oder deren Daten abfragen kann.

So kann beispielsweise die Bediengerät-Schnittstelle 64 eine Bluetooth-Schnittstelle mit dem Bluetooth-Modul 67 umfassen, die nur mit einem entsprechenden Zugangscode aktivierbar bzw. nutzbar ist. Ein Bediener muss also beispielsweise am Bediengerät 70 einen Zugangsschlüssel 83 eingeben, mit dem sich das Bluetooth-Modul bzw. die Bluetooth-Schnittstelle 74 des Bediengeräts 70 beim Steuergerät 50 oder 150 anmeldet.

Es ist auch möglich, dass das Programmmodul 71 beispielsweise anhand einer im Bediengerät 70 enthaltenen Kamera 86 einen optischen Code 85 einliest und anhand des Codes 85 einen Zugangsschlüssel generiert, zum Beispiel den Zugangsschlüssel 83, und/oder optische Daten des Codes 85 selbst an das Steuergerät 50 oder 150 übermittelt, wo ein Authentifizierungsmodul 66, dessen Programmcode ebenfalls vom Prozessor 52 ausführbar ist, die Zugangsdaten überprüft, zum Beispiel den optischen Code 85 bzw. den daraus generierten Zugangsschlüssel. Erst wenn diese Daten in Ordnung sind, ist es möglich, mit dem Bediengerät 70 Daten beim Steuergerät 50 oder 150 abzufragen und/oder das Steuergerät 50 oder 150 bzw. die zugeordnete Anhängekupplung 10, 110, zu steuern. Das Authentifizierungsmodul 66 bildet ein Authentifizierungsmittel.

Es ist auch möglich, dass das Steuergerät 50 oder 150 das Bordnetz 93 alternativ oder in Ergänzung zu seiner eigenen drahtlosen Schnittstelle 67 dazu nutzt, um mit dem Bediengerät 70 zu kommunizieren. Z.B. kann an das Bordnetz 93 ein Bluetooth-Modul, WLAN-Modul oder dergleichen sonstiges drahtlos kommunizierendes Modul angeschlossen sein, so dass das Bordnetz 93 eine drahtlose Schnittstelle 95 aufweist. Über die Bordnetz-Schnittstelle 63 kann das Steuergerät 50 oder 150 die drahtlose Schnittstelle 95 zur Kommunikation mit dem Bediengerät 70 nutzen.

## Patentansprüche

1. Steuergerät für eine an einem Kraftfahrzeug (90) angeordnete oder anordenbare Anhängekupplung (10; 110), die ein an einem Kupplungsarm (14; 114) angeordnetes Kuppelelement (23) zum Ankuppeln eines Anhängers (92) aufweist, wobei das Steuergerät (50; 150) Steuermittel (61) zur Steuerung mindestens einer Funktion der Anhängekupplung (10; 110) und/oder Auswertemittel (60) zur Auswertung mindestens eines Sensorsignals (33) eines der Anhängekupplung (10; 110) zugeordneten Sensors (30) aufweist, und wobei das Steuergerät (50; 150) eine Bediengerät-Schnittstelle (64) zur Kommunikation mit einem mobilen, von dem Kraftfahrzeug (90) und dem Steuergerät (50; 150) separaten Bediengerät (70) aufweist, wobei das Steuergerät (50; 150) zur Kommunikation mit einem eine grafische Anzeige- und/oder Bedienoberfläche (77) an einem Display des insbesondere als Mobilfunk-Telefon ausgestalteten Bediengeräts (70) erzeugenden Programmmodul (71) ausgestaltet ist, und wobei das Steuergerät (50; 150) zum Senden mindestens eines einen Status der Anhängekupplung (10; 110) repräsentierenden, insbesondere anhand des mindestens einen Sensorsignals (33) generierten oder das mindestens eine Sensorsignal (33) enthaltenden, Meldesignals (80) und/oder zum Empfangen mindestens eines Steuersignals (81; 81) zum Steuern der mindestens einen Funktion des Steuergeräts (50; 150) über die Bediengerät-Schnittstelle (64) ausgestaltet ist, **dadurch gekennzeichnet, dass** es Authentifizierungsmittel zur Überprüfung einer Autorisierung des Bediengeräts (70) zu einer Kommunikation mit dem Steuergerät (50; 150) aufweist, dass es zur Ansteuerung von elektrischen Kontakten (34) einer zur elektrischen Versorgung von mindestens einer Leuchte eines Anhängers (92) oder Lastenträgers vorgesehen Anhängersteckdose (32) ausgestaltet ist, und dass es zum Ansteuern der elektrischen Kontakte (34), nämlich zur Überprüfung der mindestens einen Leuchte, infolge eines über die Bediengerät-Schnittstelle (64) erhaltenen Steuersignals (81; 81) ausgestaltet ist.

2. Steuergerät nach Anspruch 1, **dadurch gekennzeichnet, dass** die Authentifizierungsmittel zur Überprüfung mindestens eines Zugangsschlüssels (83) oder Identifizierungscodes oder Passworts ausgestaltet sind, die das Steuergerät (50; 150) über die Bediengerät-Schnittstelle (64) von dem Bediengerät (70) empfängt.

3. Steuergerät nach einem der vorhergehenden Ansprüche, **dadurch gekennzeichnet, dass** die Bediengerät-Schnittstelle (64) oder ein Teil der Bediengerät-Schnittstelle (64) an Bord des Steuergeräts (50; 150), insbesondere innerhalb eines Gehäuses (65; 165) des Steuergeräts (50; 150), angeordnet ist und/oder dass es eine Bordnetz-Schnittstelle (63) zur Kommunikation mit einem Bordnetz (93) des Kraftfahrzeugs (90) umfasst.

4. Steuergerät nach Anspruch 3, **dadurch gekennzeichnet, dass** es zur Übertragung von über die Bordnetz-Schnittstelle (63) empfangenen Daten an das Bediengerät (70) über seine insbesondere drahtlose Bediengerät-Schnittstelle (64) und/oder zur Übertragung von über seine insbesondere drahtlose Bediengerät-Schnittstelle (64) von dem Bediengerät (70) erhaltenen Daten über die Bordnetz-Schnittstelle (63) an das Bordnetz (93) ausgestaltet ist und/oder dass es zur Kommunikation mit dem mobilen Bediengerät (70) über das Bordnetz (93) und einer mit dem Bordnetz (93) verbundenen, zur Kommunikation mit dem mobilen Bediengerät (70) vorgesehenen drahtlosen Schnittstelle (95) ausgestaltet ist.

5. Steuergerät nach einem der vorhergehenden Ansprüche, **dadurch gekennzeichnet, dass** die Bediengerät-Schnittstelle (64) eine drahtlose Schnittstelle, insbesondere eine Bluetooth-Schnittstelle und/oder eine WLAN-Schnittstelle, umfasst und/oder dass es in einem Gehäuse einer Anhängersteckdose (32) zur Stromversorgung eines Anhängers (92) oder Lastenträgers angeordnet ist.

6. Steuergerät nach einem der vorhergehenden Ansprüche, **dadurch gekennzeichnet, dass** es mindestens einen Steuerausgang (57; 58) zum Steuern oder Schalten eines zum Verriegeln des Kupplungsarms (14; 114) vorgesehenen Verriegelungsantriebs (38) und/oder eines zum Verstellen des Kupplungsarms (14; 114) vorgesehenen Stellantriebs (39) der Anhängekupplung (10; 110) aufweist, und dass es zum Ansteuern des mindestens einen Steuerausgangs (57; 58) anhand des mindestens einen über die Bediengerät-Schnittstelle (64) empfangenen Steuersignals (81; 81) ausgestaltet ist.

7. Steuergerät nach einem der vorhergehenden Ansprüche, **dadurch gekennzeichnet, dass** es einen Sensoreingang (62) für einen an der Anhängekupplung (10; 110), insbesondere dem Kupplungsarm (14; 114) oder dem Kuppelelement (23), angeordneten Sensor (30) und/oder einen an Bord des Steuergerät (50; 150) angeordneten Sensor (55) aufweist.

8. Steuergerät nach einem der vorhergehenden Ansprüche, **dadurch gekennzeichnet, dass** es zur Ausgabe von über eine Kommunikationsschnittstelle, insbesondere über eine Anhängersteckdose (32), von dem Anhänger (92) oder dem Lastenträger erhaltenen Daten, insbesondere Daten einer Parkdistanzkontrolleinrichtung des Anhängers (92) oder des Lastenträgers, an der Bediengerät-Schnittstelle (64) ausgestaltet ist.

9. Steuergerät nach einem der vorhergehenden Ansprüche, **dadurch gekennzeichnet, dass** es einen Bestandteil eines Systems bildet, das das Steuergerät (50; 150) und das insbesondere drahtlose Bediengerät (70), insbesondere in Gestalt eines Smartphones, umfasst.

10. Anhängekupplung (10; 110) mit einem Steuergerät (50; 150) nach einem der vorhergehenden Ansprüche, die ein an einem Kupplungsarm (14; 114) angeordnetes Kuppelelement (23) zum Ankuppeln eines Anhängers (92) aufweist.

11. Programmmodul (71) für ein Bediengerät (70) zur Kommunikation mit einem Steuergerät nach einem der Ansprüche 1 bis 10, wobei das Programmmodul (71) Programmcode enthält, der durch einen Prozessor des Bediengeräts (70) ausführbar ist, wobei der Programmcode dazu ausgestaltet ist, bei Ausführung durch den Prozessor eine grafische Anzeige- und/oder Bedienoberfläche (77) an einem Display des Bediengeräts (70) zu erzeugen und das mindestens eine von dem Steuergerät (50; 150) empfangende, Meldesignal (80) an der Anzeigeoberfläche oder Bedienoberfläche (77) auszugeben und/oder anhand einer an dem Bediengerät (70), insbesondere über die Bedienoberfläche (77), erfassten Bedienhandlung das mindestens ein Steuersignal (81; 81) für das Steuergerät (50; 150) zu erzeugen, **dadurch gekennzeichnet, dass** es zur Überprüfung einer Autorisierung des Bediengeräts (70) zu einer Kommunikation mit dem Steuergerät (50; 150) zur Kommunikation mit den Authentifizierungsmitteln des Steuergeräts, insbesondere zum Senden eines Zugangsschlüssels oder eines Authentifizierungs- oder Identifizierungscodes oder eines Passwortes, ausgestaltet ist, und dass es zum Senden eines Steuersignals (81) an das Steuergerät (50; 150) ausgestaltet ist, infolgedessen das Steuergerät (50; 150) elektrische Kontakte (34), nämlich zur Überprüfung mindestens einer Leuchte, ansteuert, wobei die elektrischen Kontakte (34) Bestandteile einer zur elektrischen Versorgung der mindestens einen Leuchte eines Anhängers (92) oder Lastenträgers vorgesehen Anhängersteckdose (32) sind.

12. Programmmodul (71) nach Anspruch 11, **dadurch gekennzeichnet, dass** es zur Ausgabe eines Auswahlmenüs an der grafischen Anzeige- und/oder Bedienoberfläche (77) des Bediengeräts (70) ausgestaltet ist, wobei anhand des Auswahlmenüs die Abfrage und/oder Ausgabe von Daten von dem Steuergerät (50; 150) und/oder eine Steueroberfläche zur Erzeugung des mindestens einen Steuersignals (81; 81) auswählbar ist, und/oder dass es zur Erzeugung einer berührungsempfindlichen Bedienoberfläche (77) oder Interaktion mit einer berührungsempfindlichen Bedienoberfläche (77) ausgestaltet ist, insbesondere zur Steuerung der Anhängekupplung.

13. Bediengerät (70), insbesondere Mobilfunk-Telefon oder Smartphone, mit einem Programmmodul (71) nach Anspruch 11 oder 12.

## Claims

1. Control unit for a trailer coupling (10; 110) which is or may be mounted on a motor vehicle (90) and which has a coupling element (23) mounted on a coupling arm (14; 114) for attaching a trailer (92), wherein the control unit (50; 150) has control means (61) for controlling at least one function of the trailer coupling (10; 110) and/or evaluation means (60) for the evaluation of at least one sensor signal (33) of a sensor (30) assigned to the trailer coupling (10; 110), and wherein the control unit (50; 150) has an operator unit interface (64) for communication with a mobile operator unit (70) separate from the motor vehicle (90) and the control unit (50; 150), wherein the control unit (50; 150) is designed for communication with a program module (71) generating a graphical display and/or user interface (77) on a display of the operator unit (70), designed in particular as a mobile radio telephone, and wherein the control unit (50; 150) is designed for the sending of at least one status signal (80) representing a status of the trailer coupling (10; 110), in particular with the aid of the sensor signal or signals (33) generated or containing the sensor signal or signals (33), and/or for receiving at least one control signal (81; 81) for controlling a function or functions of the control unit (50; 150) via the operator unit interface (64), **characterised in that** it has authentication means for verifying authorisation of the operator unit (70) for communication with the control unit (50; 150), that it is designed for the activation of electrical contacts (34) of a trailer socket (32) provided for the electrical power supply of at least one lamp of a trailer (92) or load carrier, and that it is designed for activation of the electrical contacts (34), namely for checking the lamp or lamps as a result of a control signal (81; 81) received over the operator unit interface (64).

2. Control unit according to claim 1, **characterised in that** the authentication means are designed for verifying at least one access code (83) or identification code or password, which the control unit (50; 150) receives from the operator unit (70) via the operator unit interface (64).

3. Control unit according to any of the preceding claims, **characterised in that** the operator unit interface (64) or a part of the operator unit interface (64) is located onboard the control unit (50; 150), in particular inside a housing (65; 165) of the control unit (50; 150), and/or that it includes a vehicle electrical system interface (63) for communication with a vehicle electrical system (93) of the motor vehicle (90).

4. Control unit according to claim 3, **characterised in that** it is designed for the transmission to the operator unit (70) of data received over the vehicle electrical system interface (63) via its operator unit interface (64), in particular wireless, and/or for the transmission to the vehicle electrical system (93) via the vehicle electrical system interface (63) of data obtained over its operator unit interface (64), in particular wireless, and/or that it is designed for communication with the mobile operator unit (70) via the vehicle electrical system (93) and a wireless interface (95) connected to the vehicle electrical system (93) and provided for communication with the mobile operator unit (70).

5. Control unit according to any of the preceding claims, **characterised in that** the operator unit interface (64) comprises a wireless interface, in particular a Bluetooth interface and/or a WLAN interface, and/or that it is located in a housing of a trailer socket (32) for the supply of power to a trailer (92) or load carrier.

6. Control unit according to any of the preceding claims, **characterised in that** it has at least one control output (57, 58) for the control or switching of a locking drive (38) provided for locking the coupling arm (14; 114), and/or an actuator (39) of the trailer coupling (10; 110) provided for adjusting the coupling arm (14; 114), and that it is designed to activate the control output or outputs (57, 58) with the aid of the control signal or signals (81; 81) received over the operator unit interface (64).

7. Control unit according to any of the preceding claims, **characterised in that** it has a sensor input (62) for a sensor (30) located on the trailer coupling (10; 110), in particular the coupling arm (14; 114) or the coupling element (23), and/or a sensor (55) located onboard the control unit (50; 150).

8. Control unit according to any of the preceding claims, **characterised in that** it is designed for the output at the operator unit interface (64) of data received via a communications interface, in particular via a trailer socket (32), from the trailer (92) or the load carrier, in particular data of a parking distance control device of the trailer (92) or the load carrier.

9. Control unit according to any of the preceding claims, **characterised in that** it forms part of a system which includes the control unit (50; 150) and the operator unit (70) which is especially wireless, in particular in the form of a smartphone.

10. Trailer coupling (10; 110) with a control unit (50; 150) according to any of the preceding claims which has, mounted on a coupling arm (14; 114), a coupling element (23) for the attaching of a trailer (92).

11. Program module (71) for an operator unit (70) for communication with a control unit according to any of claims 1 to 10, wherein the program module (71) contains program code which may be executed by a processor of the operator unit (70), wherein the program code is designed, on execution by the processor, to generate a graphical display and/or user interface (77) and to output at the display and/or user interface (77) the status signal or signals (80) received by the control unit (50; 150), and/or to generate with the aid of an operation detected at the operator unit (70), in particular via the user interface (77), the control signal or signals (81; 81) for the control unit (50; 150), **characterised in that** it is designed to verify an authorisation of the operator unit (70) to communicate with the control unit (50; 150) for communication with the authentication means of the control unit, in particular for the sending of an access code or an authentication or identification code or a password, and that it is designed for sending a control signal (81) to the control unit (50; 150), as a result of which the control unit (50; 150) activates electrical contacts (34), namely for checking a lamp or lamps, wherein the electrical contacts (34) are parts of a trailer socket (32) provided for the electrical power supply of at least one lamp of a trailer (92) or load carrier.

12. Program module (71) according to claim 11, **characterised in that** it is designed for the output of a selection menu at the graphical display and/or user interface (77) of the operator unit (70) wherein, with the aid of the selection menu, the retrieval and/or output of data from the control unit (50; 150) and/or a control interface for the generation of the control signal or signals (81; 81) is selectable, and/or that it is designed to generate a touch-sensitive use interface (77) or interaction with a touch-sensitive use interface (77), in particular for control of the trailer coupling .

13. Operator unit (70), in particular mobile radio telephone or smartphone, with a program module (71) according to claim 11 or 12.

## Revendications

1. Appareil de commande pour un attelage de remorque (10 ; 110) disposé ou pouvant être disposé au niveau d'un véhicule automobile (90), lequel présente un élément de couplage (23) disposé au niveau d'un bras d'attelage (14 ; 114), pour accoupler une remorque (92), dans lequel l'appareil de commande (50 ; 150) présente des moyens de commande (61) pour commander au moins une fonction de l'attelage de remorque (10 ; 110) et/ou des moyens d'analyse (60) pour analyser au moins un signal de capteur (33) d'un capteur (30) associé à l'attelage de remorque (10 ; 110), et dans lequel l'appareil de commande (50 ; 150) présente une interface d'appareil d'utilisation (64) pour communiquer avec un appareil d'utilisation (70) mobile séparé du véhicule automobile (90) et de l'appareil de commande (50 ; 150), dans lequel l'appareil de commande (50 ; 150) est configuré afin de communiquer avec un module de programme (71) produisant une surface d'affichage et/ou une surface d'utilisation (77) graphique au niveau d'un écran de l'appareil d'utilisation (70) configuré en particulier sous la forme d'un téléphone mobile, et dans lequel l'appareil de commande (50 ; 150) est configuré afin d'envoyer au moins un signal d'avertissement (80) représentant un statut de l'attelage de remorque (10 ; 110), généré en particulier à l'aide de l'au moins un signal de capteur (33) ou contenant l'au moins un signal de capteur (33) et/ou afin de recevoir au moins un signal de commande (81 ; 81) pour commander l'au moins une fonction de l'appareil de commande (50 ; 150) par l'intermédiaire de l'interface d'appareil d'utilisation (64), **caractérisé en ce qu'**il présente des moyens d'authentification pour surveiller une autorisation de l'appareil d'utilisation (70) concernant une communication avec l'appareil de commande (50 ; 150), qu'il est configuré afin de piloter des contacts (34) électriques d'une prise de courant de remorque (32) prévue afin d'alimenter de manière électrique au moins une lampe d'une remorque (92) ou d'un support de charges, et qu'il est configuré afin de piloter les contacts (34) électriques, à savoir afin de surveiller l'au moins une lampe, suite à un signal de commande (81 ; 81) obtenu par l'intermédiaire de l'interface d'appareil d'utilisation (64).

2. Appareil de commande selon la revendication 1, **caractérisé en ce que** les moyens d'authentification sont configurés afin de surveiller au moins une clé d'accès (83) ou un code d'identification ou un mot de passe, que l'appareil de commande (50 ; 150) reçoit de l'appareil d'utilisation (70) par l'intermédiaire de l'interface d'appareil d'utilisation (64).

3. Appareil de commande selon l'une quelconque des revendications précédentes, **caractérisé en ce que** l'interface d'appareil d'utilisation (64) ou une partie de l'interface d'appareil d'utilisation (64) est embarquée sur l'appareil de commande (50 ; 150), en particulier à l'intérieur d'un boîtier (65 ; 165) de l'appareil de commande (50 ; 150), et/ou **en ce qu'**il comprend une interface de réseau de bord (63) pour communiquer avec un réseau de bord (93) du véhicule automobile (90).

4. Appareil de commande selon la revendication 3, **caractérisé en ce qu'**il est configuré afin de transmettre à l'appareil d'utilisation (70), par l'intermédiaire de son interface d'appareil d'utilisation (64) en particulier sans fil, des données reçues par l'intermédiaire de l'interface de réseau de bord (63) et/ou afin de transmettre au réseau de bord (93), par l'intermédiaire de l'interface de réseau de bord (63), des données obtenues de l'appareil d'utilisation (70) par l'intermédiaire de son interface d'appareil d'utilisation (64) en particulier sans fil, et/ou **en ce qu'**il est configuré afin de communiquer avec l'appareil d'utilisation (70) mobile par l'intermédiaire du réseau de bord (93) et avec une interface (95) sans fil raccordée au réseau de bord (93), prévue aux fins de la communication avec l'appareil d'utilisation (70) mobile.

5. Appareil de commande selon l'une quelconque des revendications précédentes, **caractérisé en ce que** l'interface d'appareil de commande (64) comprend une interface sans fil, en particulier une interface Bluetooth et/ou une interface WLAN, et/ou **en ce qu'**il est disposé dans un boîtier d'une prise de courant de remorque (32) pour l'alimentation en courant d'une remorque (92) ou d'un support de charges.

6. Appareil de commande selon l'une quelconque des revendications précédentes, **caractérisé en ce qu'**il présente au moins une sortie de commande (57 ; 58) pour commander ou commuter un entraînement de verrouillage (38) prévu afin de verrouiller le bras d'attelage (14 ; 114) et/ou un entraînement de réglage (39), prévu afin d'ajuster le bras d'attelage (14 ; 114), de l'attelage de remorque (10 ; 110), et **en ce qu'**il est configuré pour piloter l'au moins une sortie de commande (57 ; 58) à l'aide de l'au moins un signal de commande (81 ; 81) reçu par l'intermédiaire de l'interface d'appareil d'utilisation (64).

7. Appareil de commande selon l'une quelconque des revendications précédentes, **caractérisé en ce qu'**il présente une entrée de capteur (62) pour un capteur (30) disposé au niveau de l'attelage de remorque (10 ; 110), en particulier au niveau du bras d'attelage (14 ; 114) ou au niveau de l'élément de couplage (23) et/ou un capteur (55) embarqué sur l'appareil de commande (50 ; 150).

8. Appareil de commande selon l'une quelconque des revendications précédentes, **caractérisé en ce qu'**il est configuré afin d'émettre au niveau de l'interface d'appareil d'utilisation (64) des données obtenues par la remorque (92) ou le support de charges par l'intermédiaire d'une interface de communication, en particulier par une prise de courant de remorque (32), en particulier des données d'un dispositif de contrôle de distance de stationnement de la remorque (92) ou du support de charges.

9. Appareil de commande selon l'une quelconque des revendications précédentes, **caractérisé en ce qu'**il forme un élément constitutif d'un système, qui comprend l'appareil de commande (50 ; 150) et l'appareil d'utilisation (70) en particulier sans fil, se présentant en particulier sous la forme d'un téléphone intelligent.

10. Attelage de remorque (10; 110) comprenant un appareil de commande (50 ; 150) selon l'une quelconque des revendications précédentes, qui présente un élément de couplage (23) disposé au niveau d'un bras d'attelage (14 ; 114), pour accoupler une remorque (92).

11. Module de programme (71) pour un appareil d'utilisation (70) pour communiquer avec un appareil de commande selon l'une quelconque des revendications 1 à 10, dans lequel le module de programme (71) contient un code de programme, qui peut être exécuté par un processeur de l'appareil d'utilisation (70), dans lequel le code de programme est configuré afin de produire, lors de l'exécution par le processeur, une surface d'affichage et/ou d'utilisation (77) graphique au niveau d'un écran de l'appareil d'utilisation (70) et afin d'émettre au niveau de la surface d'affichage ou à la surface d'utilisation (77) l'au moins un signal d'avertissement (80) reçu par l'appareil de commande (50 ; 150) et/ou afin de produire à l'aide d'une manipulation d'utilisation saisie au niveau de l'appareil d'utilisation (70), en particulier par l'intermédiaire de la surface d'utilisation (77), l'au moins un signal de commande (81 ; 81) pour l'appareil de commande (50 ; 150), **caractérisé en ce qu'**il est configuré afin de surveiller une autorisation de l'appareil d'utilisation (70) concernant une communication avec l'appareil de commande (50 ; 150) aux fins de la communication avec les moyens d'authentification de l'appareil de commande, en particulier afin d'envoyer une clé d'accès ou un code d'authentification ou d'identification ou un mot de passe, et qu'il est configuré pour envoyer un signal de commande (81) à l'appareil de commande (50 ; 150), lequel appareil de commande (50 ; 150) pilote, en conséquence, des contacts (34) électriques, à savoir afin de surveiller au moins une lampe, dans lequel les contacts (34) électriques sont des éléments constitutifs d'une prise de courant de remorque (32) prévue afin d'alimenter de manière électrique l'au moins une lampe d'une remorque (92) ou d'un support de charges.

12. Module de programme (71) selon la revendication 11, **caractérisé en ce qu'**il est configuré afin d'émettre un menu de sélection au niveau de la surface d'affichage et/ou d'utilisation (77) graphique de l'appareil d'utilisation (70), la consultation et/ou l'émission de données par l'appareil de commande (50 ; 150) et/ou une surface de commande pour produire l'au moins un signal de commande (81 ; 81) pouvant être sélectionnées à l'aide du menu de sélection, et/ou **en ce qu'**il est configuré afin de produire une surface d'utilisation (77) sensible à l'effleurement ou une interaction avec une surface d'utilisation (77) sensible à l'effleurement, en particulier afin de commander l'attelage de remorque.

13. Appareil d'utilisation (70), en particulier téléphone mobile ou téléphone intelligent, comprenant un module de programme (71) selon la revendication 11 ou 12.
